(19) Europäisches Patentamt
European Patent Office
Office européen des brevets

(11) **EP 3 665 399 B1**

(12) **EUROPÄISCHE PATENTSCHRIFT**

(45) Veröffentlichungstag und Bekanntmachung des Hinweises auf die Patenterteilung:
**03.01.2024  Patentblatt 2024/01**

(21) Anmeldenummer: **18762014.1**

(22) Anmeldetag: **08.08.2018**

(51) Internationale Patentklassifikation (IPC):
*F16F 9/512* *(2006.01)*     *F16F 9/516* *(2006.01)*
*E05F 5/02* *(2006.01)*       *F16F 9/34* *(2006.01)*
*E05F 5/10* *(2006.01)*

(52) Gemeinsame Patentklassifikation (CPC):
**F16F 9/512; E05F 5/02; F16F 9/516;**
A47B 2210/0094; E05F 5/10; E05Y 2201/264;
E05Y 2600/53; E05Y 2900/20; F16F 9/3405;
F16F 2232/06

(86) Internationale Anmeldenummer:
**PCT/EP2018/071459**

(87) Internationale Veröffentlichungsnummer:
**WO 2019/030258 (14.02.2019 Gazette 2019/07)**

(54) **FLUIDDÄMPFER FÜR GEGENEINANDER VERSTELLBARE TEILE MIT EINEM IN EINEM ZYLINDER VERSTELLBAR GEFÜHRTEN KOLBEN**

FLUID DAMPER FOR MUTUALLY ADJUSTABLE PARTS WITH A GUIDED PISTON ADJUSTABLE IN A CYLINDER

AMORTISSEUR À FLUIDE POUR PARTIES DE MEUBLES RÉGLABLES LES UNES PAR RAPPORT AUX AUTRES POURVU D'UN PISTON GUIDÉ DE MANIÈRE RÉGLABLE DANS UN CYLINDRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.08.2017  EP 17185525**

(43) Veröffentlichungstag der Anmeldung:
**17.06.2020  Patentblatt 2020/25**

(73) Patentinhaber: **Held, Wolfgang**
**6971 Hard (AT)**

(72) Erfinder: **Held, Wolfgang**
**6971 Hard (AT)**

(74) Vertreter: **Jeck, Anton**
**Jeck, Fleck & Partner mbB**
**Patentanwälte**
**Klingengasse 2**
**71665 Vaihingen/Enz (DE)**

(56) Entgegenhaltungen:
WO-A1-2005/045278     DE-A1-102004 008 956
DE-A1-102015 109 188   DE-T2- 69 821 909
DE-U1-202014 002 228

**Beschreibung**

Die Erfindung betrifft einen Fluiddämpfer, also einen Dämpfer mit Fluid, für gegeneinander verstellbare Möbelteile mit einem in einem Zylinder verstellbar geführten Kolben nach dem Oberbegriff des Anspruchs 1.

Bei einem derartigen Fluiddämpfer nach der DE 20 2014 002 228 U1 ist der Kolben mit einer aus dem Zylinder herausgeführten Kolbenstange verbunden. Die Kolbenstange ist mit dem verstellbaren Möbelteil in Kontakt bringbar. Der Zylinder ist mit dem kolbenstangenfreien geschlossenen Ende mit dem feststehenden Möbelteil verbunden. Im Kolben ist eine Durchlassöffnung für ein im Zylinder befindliches Fluid vorgesehen. Beim Bewegen der Möbelteile gegeneinander verschließt in Abhängigkeit von der Geschwindigkeit oder vom Druck auf die Kolbenstange ein auf dem Kolben drehbar gelagerter Flügel die Durchlassöffnung im Kolben fortschreitend. Beim Bewegen der Möbelteile voneinander stellt eine Feder den Flügel auf dem Kolben zurück und gibt die Durchlassöffnung frei. Der Zylinder ist an der offenen Stirnseite dabei mit einem Verschlussteil verschlossen. Der Kolben weist eine senkrechte zylinderförmige Partie auf, die sich in axialer Richtung der Kolbenstange über die gesamte Höhe des Flügels in der axialen Richtung gesehen erstreckt. Diese senkrechte zylinderförmige Partie weist über die Höhe des Flügels hinweg gesehen einen Kreisabschnitt als Schnittebene auf.

Zur Montage muss während des Einführens der Kolbenstange in den Kolben der Flügel und die diese rückstellende Feder in einer Ausnehmung des Kolbens eingelegt werden. Anschließend muss die Kolbenstange bis ans Ende des Kolbens gleichzeitig durch je eine zentrale Öffnung der Feder und des Flügels geschoben werden, einhergehend mit hohem Montageaufwand und -geschick.

Durch die DE 20 2005 020 820 U1 ist ebenfalls ein Fluiddämpfer bekannt. Damit bei diesem bekannten Fluiddämpfer bei Überlast, d. h. bei großer Druckbeaufschlagung, eine extreme Dämpfung verhindert wird, ist vorgeschlagen, dass oberhalb eines Schwellwerts der Druckbeaufschlagung auf den Fluiddämpfer zumindest eine Überlastöffnung im Kolben und/oder zwischen Kolben und Zylinder geöffnet wird. Dadurch wird erreicht, dass kein Dämpferprellen auftritt. Außerdem wird ein hartes Schließen der Möbelteile verhindert, ohne dass der Schwellwert der Druckbeaufschlagung durch spezielle Ausgestaltung der Durchlassöffnung im Kolben bzw. zwischen Kolben und Zylinder erreicht wird und ohne, dass dafür besondere Formen und Größen der Durchlassöffnungen gewählt werden müssen.

Durch die DE 698 21 909 T2 ist eine bewegungssteuernde Vorrichtung mit einem in einem Zylinder verstellbar geführten Kolben bekannt. Im Kolben ist eine Durchlassöffnung für durchströmendes Fluid vorgesehen. Der Kolben weist federbelastete Flügel auf, die mit der Durchlassöffnung zusammenwirken. Das Zusammenwirken sieht vor, dass beim Stillstand des Kolbens die Durchlassöffnung verschlossen ist und nur gegen einen hohen Anfangsdruck freigegeben wird. Einmal freigegeben, verringert sich der notwendige Druck auf die Kolbenstange. Bei erneutem Stillstand an beliebiger Position ist wieder der hohe Anfangsdruck notwendig. Die bewegungssteuernde Vorrichtung ist nicht als Fluiddämpfer für gegeneinander verstellbare Möbelteile geeignet, weil es bei ihr zu ständigem Dämpferprellen und hartem Anschlagen der Möbelteile beim Schließen käme.

Durch die DE 10 2015 109 188 A1 ist ein Fluiddämpfer für gegeneinander verstellbare Möbelteile bekannt. Der Fluiddämpfer umfasst einen in einem Zylinder verstellbar geführten Kolben. Im Kolben ist eine Durchlassöffnung für durchströmendes Fluid vorgesehen. In Abhängigkeit von der Geschwindigkeit oder dem Druck auf die Kolbenstange beim Bewegen der Möbelteile gegeneinander verschließt ein auf dem Kolben drehbar gelagerter Flügel mehr und mehr die Durchlassöffnung. Beim Bewegen der Möbelteile voneinander stellt eine Feder den Flügel zurück, und dieser gibt die Durchlassöffnung wieder frei.

Durch die US 7 410 154 B2 ist ein Fluiddämpfer für gegeneinander verstellbare Möbelteile bekannt. Der Fluiddämpfer umfasst einen in einem Zylinder verstellbar geführten Kolben. Im Kolben ist eine Durchlassöffnung für durchströmendes Fluid vorgesehen. Ein Abdeckelement ist drehbar an der Kolbenstange angeordnet. Dabei hat eine Drehung in die eine Richtung ein zunehmendes Verschließen und eine Drehung in die entgegengesetzte Richtung ein zunehmendes Öffnen der Durchlassöffnung zur Folge. Ein Drehelement ist mit dem Abdeckelement verbunden. Gleitet das Drehelement entlang der Kolbenstange, verdreht es das Abdeckelement. Zwischen dem Drehelement und dem Abdeckelement ist ein Rückstellelement angeordnet, welches das Drehelement in seine Ausgangslage zurückführt, einhergehend mit einem Öffnen der Durchlassöffnung.

Durch die US 8 925 695 B2 ist ein Fluiddämpfer für gegeneinander verstellbare Möbelteile bekannt. Der Fluiddämpfer umfasst einen in einem Zylinder verstellbar geführten Kolben. Im Kolben ist eine Durchlassöffnung für durchströmendes Fluid vorgesehen. Der Fluiddämpfer umfasst ein Ventilelement aus Elastomer.

Aus der DE 10 2004 008956 A1 ist ein Schwingungsdämpfer mit einem hydraulischen Zuganschlag bekannt welcher ein Zylinderrohr mit einer Arbeitskammer, einer Kolbenstange einem Kolben und einem Zylinderrohr aufweist.

Die Aufgabe der Erfindung besteht darin, den Fluiddämpfer nach dem Oberbegriff des Anspruchs 1 weiter zu verbessern. Die gestellte Aufgabe wird durch die Merkmale des Anspruchs 1 gelöst.

Die Aufgabe wird durch einen Fluiddämpfer, wie in Anspruch 1 definiert, gelöst. Bevorzugte Ausführungsformen sind in den abhängigen Ansprüchen angegeben.

Ein sich hierdurch ergebender Vorteil ist unter anderem eine vereinfachte Montage. Der Kolben und das federbelastete Schließelement kann mit seiner relativ zum Kolben radial verdrehbar angeordneten Hülse die in Quernuten des Kolbens gehalten ist, vormontiert werden. Die Quernuten können beispielsweise als radial abstehende Nocken ausgeführte Führungselemente unabhängig von der Kolbenstange bewegbar/vorgesehen sein.

Die Quernuten erlauben ein radiales Verdrehen der Hülse gegenüber dem Kolben. Die Länge der Quernuten in Umfangsrichtung legt den Verdrehbereich fest. In Längsrichtung axial zur Längserstreckung des Kolbens und der diese tragende Kolbenstange ist die Hülse durch die in die Quernuten eingreifenden Führungselemente gegenüber dem Kolben unbeweglich gehalten.

Eine die Federbelastung erzeugende Feder kann beispielsweise bei der Vormontage von Hülse und Kolben zwischen Hülse und Kolben eingebracht werden. Alternativ kann sie nachträglich, beispielsweise nach der Vormontage von Hülse und Kolben, entweder zwischen Hülse und Kolben eingebracht werden oder außen zwischen Hülse und Kolben wirksam angeordnet werden.

Zusätzliche Vorteile ergeben sich dadurch, dass durch diese Art der Steuerung der Durchlassöffnungen im Kolben die Bauteile des Kolbens symmetrisch belastet werden. Dadurch wird die Stabilität des Fluiddämpfers erhöht und die Abnutzung dieser Bauteile vermindert.

Weitere Ausbildungen des Fluiddämpfers können den Unteransprüchen entnommen werden.

So schließt sich an die innere Stirnfläche des Verschlussteils ein kolbenförmiges, siebartiges Fluidverdrängungselement an, durch das die Kolbenstange hindurchgeführt ist und das auf seiner Umfangsfläche und seiner inneren Stirnfläche Sieböffnungen aufweist.

Das Fluidverdrängungselement ist bevorzugt koaxial zur Längsachse der Kolbenstange verschiebbar angeordnet, beispielsweise auf der Kolbenstange verschiebbar angeordnet.

Gemäß einer weiteren Ausbildung des Fluiddämpfers ist das Fluidverdrängungselement als Kunststoff-Schaumstoff-Element ausgebildet.

Gemäß einer weiteren Ausbildung des Fluiddämpfers erstrecken sich die im Kolben siebartig ausgebildeten Durchlassöffnungsbereiche über einen Winkel von vorzugsweise jeweils 10° - 40° des Umfangs des Kolbens.

Gemäß einer weiteren Ausbildung des Fluiddämpfers hält die Schraubenfeder die Hülse in der zurückgestellten Stellung bei geöffneten Durchlassöffnungsbereichen.

Gemäß einer weiteren Ausbildung des Fluiddämpfers verschließen beim Bewegen der Kolbenstange aus der Ausgangsstellung mit hoher Geschwindigkeit die Flügel die Durchlassöffnungsbereiche im Kolben bis auf einen kleinen Querschnitt. Der Durchfluss des Fluids durch die Durchlassöffnungen im Kolben ist daher geringer.

Als Fluid ist im Zylinder vorzugsweise Öl verwendet.

Die beiden Bereiche der Fluiddurchlassöffnungen im Kolben erstrecken sich vorzugsweise über einen Winkel von je 10° - 40° des Kolbenumfangs.

Bei geöffneten Möbelteilen liegt in der Ausgangsstellung der Kolben über dem Fluidverdrängungselement auf dem Verschlussteil auf. Dabei hält die Schraubenfeder die Flügel in der zurückgestellten Stellung bei geöffneten Fluiddurchlassöffnungen.

Die Erfindung wird nun anhand von Zeichnungen näher erläutert. Es zeigen:

Fig. 1     eine perspektivische Explosionsdarstellung eines Fluiddämpfers mit Zylinder, Hülse, Feder, Kolben, Kolbenstange und Verschlussteil,

Fig. 2     eine perspektivische Darstellung eines weiteren Fluiddämpfers mit aufgeschnittenem Zylinder, Hülse, Feder, Kolbenstange, Fluidverdrängungselement und Verschlussteil,

Fig. 3     eine weitere perspektivische Darstellung des Fluiddämpfers der Fig. 2,

Fig. 4     eine der Fig. 2 ähnelnde perspektivische Darstellung des Fluiddämpfers, jedoch mit Kolben; eine entsprechende Perspektive, bei der sich die Bauteile des Fluiddämpfers bei hoher Geschwindigkeit des Kolbens befinden,

Fig. 5     eine der Fig. 3 ähnelnde perspektivische Darstellung des Fluiddämpfers, jedoch mit Kolben,

Fig. 6     eine den Figuren 4, 5 ähnelnde perspektivische Darstellung des Fluiddämpfers, bei der sich die Bauteile des Fluiddämpfers bei verminderter Geschwindigkeit des Kolbens befinden,

Fig. 7     einen Querschnitt durch den Fluiddämpfer der Fig. 6 an der Stelle, an der sich die Flügel im Kolben bei geringer Druckbelastung befinden,

Fig. 8     eine den Figuren 4, 5 ähnelnde perspektivische Darstellung des Fluiddämpfers, bei der sich die Bauteile des Fluiddämpfers bei beginnender erhöhter Geschwindigkeit des Kolbens befinden,

Fig. 9     einen Querschnitt durch den Fluiddämpfer der Fig. 8 an der Stelle, an der sich die Flügel im Kolben bei beginnender erhöhter Geschwindigkeit des Kolbens befinden,

Fig. 10     eine den Figuren 4, 5 ähnelnde perspektivische Darstellung des Fluiddämpfers, bei der sich die Bauteile des Fluiddämpfers bei erhöhter Geschwindigkeit des Kolbens befinden,

Fig. 11    einen Querschnitt durch den Fluiddämpfer der Fig. 10 an der Stelle, an der sich die Flügel im Kolben bei erhöhter Geschwindigkeit des Kolbens befinden,

Fig. 12    eine den Figuren 4, 5 ähnelnde perspektivische Darstellung des Fluiddämpfers, bei der sich die Bauteile des Fluiddämpfers befinden, wenn die Federkraft nicht ausreicht, die Durchlassöffnung offen zu halten,

Fig. 13    einen Querschnitt durch den Fluiddämpfer der Fig. 12 an der Stelle, an der sich die Flügel im Kolben befinden,

Fig. 14    eine den Figuren 4, 5 ähnelnde perspektivische Darstellung eines weiteren Ausführungsbeispiels eines Fluiddämpfers, bei der sich die Bauteile des Fluiddämpfers bei niedriger Geschwindigkeit oder gerade beginnender Bewegung des Kolbens befinden,

Fig. 15    einen Querschnitt durch den Fluiddämpfer der Fig. 14 an der Stelle, an der sich die Flügel im Kolben bei erhöhter Geschwindigkeit des Kolbens befinden,

Fig. 16    eine perspektivische Darstellung des Fluiddämpfers aus Fig. 14, bei der sich die Bauteile des Fluiddämpfers bei schlagartig erhöhter Geschwindigkeit befinden,

Fig. 17    einen Querschnitt durch den Fluiddämpfer der Fig. 14 an der Stelle, an der sich die Flügel im Kolben bei schlagartig erhöhter Geschwindigkeit des Kolbens befinden,

Fig. 18    eine perspektivische Darstellung des Fluiddämpfers aus Fig. 14, bei der sich die Bauteile des Fluiddämpfers bei erhöhter Geschwindigkeit befinden und

Fig. 19    einen Querschnitt durch den Fluiddämpfer der Fig. 14 an der Stelle, an der sich die Flügel im Kolben bei erhöhter Geschwindigkeit des Kolbens befinden.

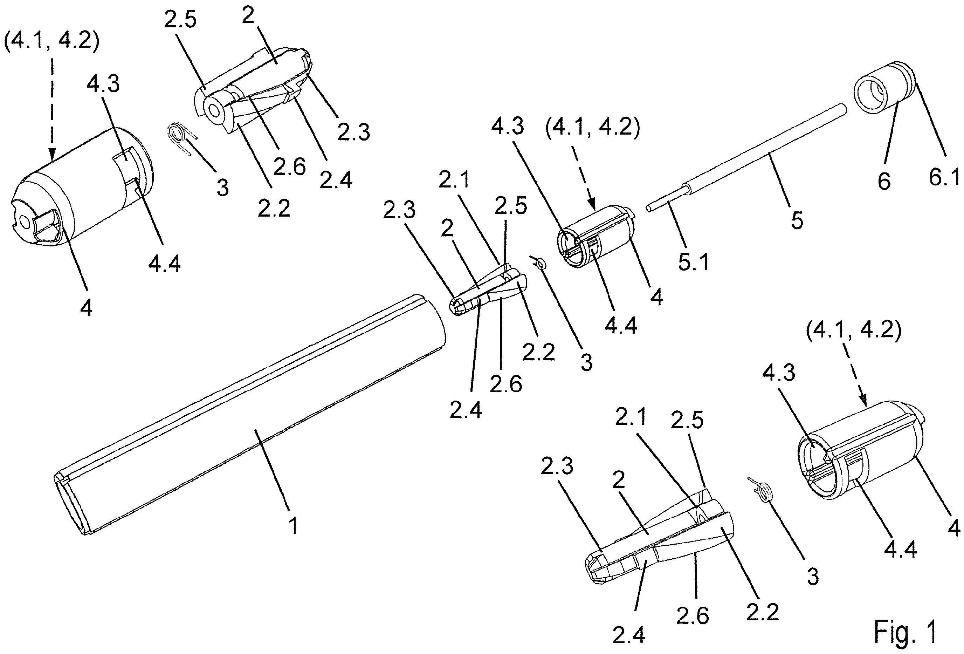

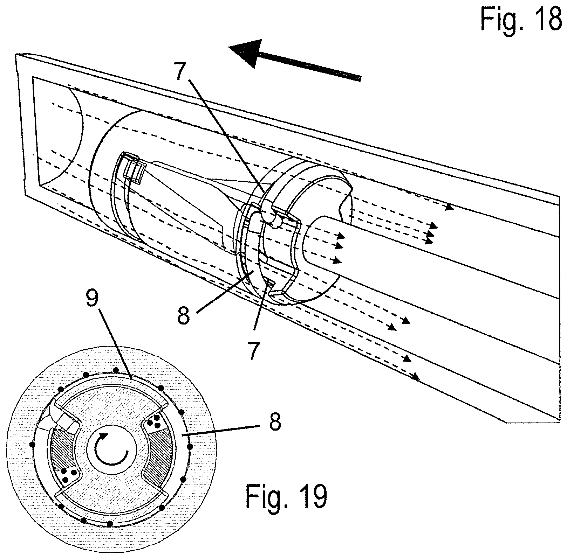

Ein in Fig. 1 bis Fig. 19 ganz oder in Teilen dargestellter Fluiddämpfer für gegeneinander verstellbare Möbelteile ist mit einem in einem Zylinder 1 entlang der Längsachse des Zylinders verstellbar geführten Kolben 4 ausgestattet.

Der Kolben 4 ist zylinderförmig ausgebildet und mit seinem Außendurchmesser an den Innendurchmesser des Zylinders 1 angepasst.

Der Kolben 4 unterteilt den Zylinder in zwei Fluidräume. Im Kolben 4 und/oder zwischen Kolben 4 und Zylinder 1 ist zumindest eine Durchlassöffnung 4.1, 4.2 für durchströmendes Fluid vorgesehen. Dadurch kann bei einer Bewegung des Kolbens 4 im Zylinder entlang dessen Längs- oder Zylinderachse ein Fluidaustausch zwischen den beiden Fluidräumen stattfinden.

Der mindestens einen Durchlassöffnung 4.1, 4.2 ist mindestens ein gegenüber dem Kolben 4 federbelastetes Schließelement zugeordnet. Das Schließelement weist eine der Anzahl von Durchlassöffnungen 4.1, 4.2 entsprechende Zahl von Schließflächen auf.

Das Schließelement umfasst eine Hülse 2, die relativ zum Kolben 4 gegen eine Federbelastung um die Längsachse oder um eine parallel zu dieser verlaufende Achse - kurz: radial - verdrehbar angeordnet ist. Die Hülse 2 trägt an ihrem Umfang eine der Anzahl von Durchlassöffnungen 4.1, 4.2 entsprechende Zahl von die Schließflächen bildenden oder umfassenden Flügeln 2.1, 2.2; 2.1', 2.2'.

Wichtig ist, in diesem Zusammenhang hervorzuheben, dass im vorliegenden Dokument der Begriff Achse im Gegensatz zu den Begriffen Welle oder Kolbenstange eine geometrische Achse und nicht ein Maschinenelement bezeichnet.

Die Flügel 2.1, 2.2; 2.1', 2.2' sind dabei, wie nachfolgend beschrieben, mit den Durchlassöffnungen 4.1, 4.2 in Wirkverbindung bringbar.

Die Federbelastung zwischen dem Kolben 4 und dem Schließelement ist so gerichtet, dass

1. der mindestens eine Flügel 2.1, 2.2; 2.1', 2.2' die wenigstens eine Durchlassöffnung 4.1, 4.2 freigibt, wenn der Kolben 4 relativ zur Längsachse des Zylinders 1 unbewegt ist,

2. der mindestens eine Flügel 2.1, 2.2; 2.1', 2.2' die wenigstens eine Durchlassöffnung 4.1, 4.2 freigibt, wenn der Kolben 4 relativ zu dem Zylinder 1 in einer ersten Richtung bewegt wird und

3. der mindestens eine Flügel 2.1, 2.2; 2.1', 2.2' die wenigstens eine Durchlassöffnung 4.1, 4.2 bei einer Bewegung entgegen der Bewegungsrichtung gemäß 2. mit zunehmender Relativgeschwindigkeit zwischen Kolben 4 und Zylinder 1 entlang dessen Längsachse fortschreitend verschließt.

Der Fluiddämpfer umfasst nach einer bevorzugten Ausführungsform eine hohlzylinderförmige Partie des Kolbens 4. Diese umgibt mit ihrer Wand die Hülse 2 und den mindestens einen an ihrem Umfang angeordneten Flügel 2.1, 2.2; 2.1', 2.2' entlang zumindest eines Teils ihrer sich parallel zur Zylinderachse des Zylinders erstreckenden Längsachse in radialer Richtung vollständig. Die zur besseren Unterscheidung kurz auch als Hohlzylinderpartieachse bezeichnete Längsachse der hohlzylinderförmigen Partie des Kolbens 4 stimmt dabei mit der bereits zuvor erwähnten Längsachse überein oder verläuft parallel zu dieser. Entlang dieser ist der Kolben 4 in dem Zylinder 1 verstellbar geführt,

Nach dem Stand der Technik weist der Kolben eine senkrechte zylinderförmige Partie auf, die sich in axialer Richtung der Kolbenstange über die gesamte Höhe des Flügels in der axialen Richtung gesehen erstreckt, und die über die gesamte Höhe des Flügels hinweg gesehen einen Kreisabschnitt als Schnittebene aufweist. Vorzugsweise umgibt die Wand der hohlzylinderförmigen Partie in Umfangsrichtung gesehen den mindestens einen am Umfang der Hülse 2 angeordneten Flügel 2.1, 2.2; 2.1', 2.2' vollständig, zumindest entlang eines Teils der sich parallel zur Längsachse erstreckenden und/oder parallel zu dieser verlaufenden Hohlzylinderpartieachse. Nach dem Stand der Technik erstreckt sich die senkrechte zylinderförmige Partie vollständig über die Höhe des Flügels entlang der Längsachse gesehen. Sie umgibt jedoch den Flügel in Umfangsrichtung gesehen gar nicht oder nur teilweise.

Es ist ersichtlich, dass die hohlzylinderförmige Partie des Kolbens 4 aufgrund ihrer hohlzylinderförmigen Gestalt die Hülse 2 und den mindestens einen an ihrem Umfang angeordneten Flügel 2.1, 2.2; 2.1', 2.2' zumindest bereichsweise vollständig umgibt. Dies kann bevorzugt zumindest entlang eines Teils ihrer Längsachse der Fall sein. Vorzugsweise umgibt der Kolben die Hülse in radialer Richtung beziehungsweise in Umfangsrichtung der Hülse 2. Die Längsachse kann sich parallel zur Zylinderachse des Zylinders erstrecken und auch als Hohlzylinderpartieachse bezeichnet werden.

Bevorzugt ist die mit dem mindestens einen von ihr getragenen Flügel 2.1, 2.2; 2.1', 2.2' das Schließelement bildende, relativ zum Kolben 4 radial verdrehbar angeordnete Hülse 2 am Kolben 4 verrastet. Hierbei werden eine radiale Verdrehbarkeit und eine Festlegung gegenüber dem Kolben und/oder der Hülse in axialer Richtung beibehalten.

Eine solche Verrastung umfasst bevorzugt eine die Hülse 2 in Axialrichtung des Kolbens 4 festlegende und radial verdrehbar haltende Rastverbindung. Diese kann beispielsweise durch in Quernuten 4.3, 4.4 des Kolbens 4 eingreifende Führungselemente 2.3, 2.4 gebildet sein.

Die Quernuten 4.3, 4.4 können beispielsweise in der hohlzylinderförmigen Partie des Kolbens 4 angeordnet sein.

Die Führungselemente 2.3, 2.4 können bevorzugt radial abstehend an der Hülse 2 angeordnet sein. Die Führungselemente sind mit den Quernuten in axialer Richtung der Längsachse der hohlzylinderförmigen Partie korrespondierend. In Umfangsrichtung sind die Führungselemente kürzer als die Quernuten 4.3, 4.4 ausgebildet, um die Verdrehbarkeit der Hülse 2 gegenüber dem Kolben 4 sicherzustellen.

Die Verteilung der Führungselemente 2.3, 2.4 über den Außenumfang/die Außenseite 2.5 der Hülse 2 hinweg entspricht der Verteilung der Quernuten 4.3, 4.4 über den Innenumfang der hohlzylinderförmigen Partie des Kolbens 4 hinweg. Bevorzugt ist eine gleichmäßige Verteilung über die Umfänge vorgesehen.

Wichtig ist hervorzuheben, dass die Führungselemente 2.3, 2.4 alternativ am Innenumfang der hohlzylinderförmigen Partie des Kolbens 4 und die Quernuten 4.3, 4.4 am Außenumfang der Hülse 2 vorgesehen sein können. Ebenso können beispielsweise zur lage- und positionsrichtigen Montage von Hülse 2 und Kolben 4 Führungselemente 2.3, 2.4 sowohl am Innenumfang der hohlzylinderförmigen Partie des Kolbens 4 als auch am Außenumfang der Hülse 2 vorgesehen sein. Denen können am jeweiligen Gegenpart gegenübergestellt Quernuten 4.3, 4.4 zugeordnet sein. Hierdurch können Montagefehler vermieden werden, indem das Schließelement durch eine entsprechende codierungsartige Anordnung von Quernuten 4.3, 4.4 und Führungselementen 2.3, 2.4 nur in exakt einer Ausrichtung und Drehlage in die hohlzylinderförmige Partie des Kolbens 4 eingebracht und dort verrastet werden kann.

Zusammengefasst ist die Hülse 2 demnach radial verdrehbar bevorzugt mittels Führungselementen 2.3, 2.4 in Quernuten 4.3, 4.4, beispielsweise des Kolbens 4, gehalten.

Vorzugsweise verschließt das Schließelement die Durchlassöffnungen 4.1, 4.2 gegen eine Druckbeanspruchung auf den Fluiddämpfer fortschreitend und gibt sie sowohl bei unbeanspruchtem Fluiddämpfer als auch bei einer Zugbeanspruchung auf den Fluiddämpfer frei.

Beim Bewegen der Kolbenstange 5 aus der Ausgangsstellung mit hoher Geschwindigkeit verschließen die Flügel 2.1, 2.2 die Durchlassöffnungsbereiche 4.1, 4.2 im Kolben 4 bis auf einen kleinen Querschnitt.

Die Schließflächen und die Strömungsflächen sind, wie bereits erwähnt, bevorzugt von Flügeln 2.1, 2.2; 2.1', 2.2' umfasst und/oder gebildet.

Die Flügel 2.1, 2.2; 2.1', 2.2' stehen vorteilhaft radial zur Längsachse des Zylinders 1 von der Hülse 2 ab. Hierdurch ragen sie frei in eine sich bei einem Fluidaustausch zwischen den beiden Fluidräumen einstellende Fluidströmung hinein, einhergehend mit einer bestmöglichen Umströmung. Besonders bevorzugt erstrecken sich die Flügel entlang einer Innenseite des Kolbens axial entlang der Längsachse des Zylinders. Besonders bevorzugt erstrecken sich die Flügel alternativ oder ergänzend auch entlang einer Außenseite/einem Außenumfang der Hülse in Längsrichtung des Zylinders, vorzugsweise zwischen Hülse und Kolben.

Bevorzugt trägt die Hülse 2 auf ihrem Umfang in Längsrichtung zwei gegenüberliegende die Strömungsflächen bildende Flügel 2.1, 2.2; 2.1', 2.2'. Deren Außenflächen umfassen die Schließflächen, die über zwei im Kolben 4 und/oder zwischen Kolben 4 und Zylinder 1 gebildete auch als Fluiddurchlassbereiche bezeichnete Durchlassöffnungen 4.1, 4.2 für deren Verschließen schiebbar sind.

Bevorzugt sind aus nachfolgend noch erwähntem Grund mindestens zwei vorzugsweise gleichmäßig über den Umfang verteilt angeordnete Durchlassöffnungen 4.1, 4.2 für durchströmendes Fluid vorgesehen.

Die Hülse 2 umfasst an ihrem Umfang entsprechend der Anordnung der Durchlassöffnungen 4.1, 4.2 verteilt angeordnete Strömungsflächen.

Die Strömungsflächen sind derart ausgebildet, dass sie durch das bei entgegen der Bewegungsrichtung entlang der Längsachse (entgegen der ersten Richtung gemäß 2.) des Zylinders 1 relativ zu diesem bewegtem Kolben 4 sie umströmende Fluid die Hülse 2 gegenüber dem Kolben 4 gegen die Federbelastung verdrehen, so dass die Schließflächen die Durchlassöffnungen 4.1, 4.2 mit zunehmender Relativgeschwindigkeit fortschreitend verschließen.

Nunmehr erschließt sich der voranstehend genannte Grund einerseits in einer gegenüber nur einer Strömungsfläche, entsprechend nur einer lagerichtigen Einbauposition, vereinfachten Montage und andererseits in einer höheren Betriebszuverlässigkeit. Bei nur einer Strömungsfläche kommt es zu einer einseitigen Beanspruchung, was zu einem Verklemmen der relativ zueinander beweglichen Bauteile, Hülse 2 und Kolben 4, führen kann. Zwei oder mehr gegenüberliegend angeordnete Strömungsflächen ziehen eine symmetrische Beanspruchung frei von Kippmomenten nach sich und sind daher langlebiger.

Der Kolben 4 ist vorteilhaft mit einer aus dem Zylinder 1 herausgeführten Kolbenstange 5 verbunden, die mit einem verstellbaren Möbelteil in Kontakt bringbar ist.

Der Zylinder 1 kann mit dem kolbenstangenfreien geschlossenen Ende und dem feststehenden Möbelteil verbunden sein.

Zwischen Kolben 4 und dem Schließelement, vorzugsweise zwischen dem Kolben 4 und der das Schließelement bildenden Hülse 2 mit dem mindestens einen von ihr getragenen Flügel 2.1, 2.2; 2.1', 2.2', kann eine die Federbelastung erzeugende Feder angeordnet sein. Vorteilhaft handelt es sich hierbei um eine Schraubenfeder 3. Diese kann bauraumsparend zwischen Kolben 4 und Hülse 2 angeordnet werden.

Die bevorzugt als Schraubenfeder 3 ausgeführte Feder hält die Hülse 2 in der zurückgestellten Stellung bei geöffneten Durchlassöffnungsbereichen 4.1, 4.2.

Der Zylinder 1 des Fluiddämpfers kann an seinem, kurz auch als offene Stirnseite bezeichneten, frei von einer Durchführung der Kolbenstange 5 ausgeführten Ende mit einem Verschlussteil 6 verschlossen sein.

An die innere Stirnfläche 4 des Verschlussteils 6 kann sich ein kolbenförmiges, siebartiges Fluidverdrängungselement 7 anschließen, durch das die Kolbenstange 5 hindurchgeführt ist. Das Fluidverdrängungselement 7 kann auf seiner Umfangsfläche und seiner inneren Stirnfläche Sieböffnungen 7.1 - 7.3 aufweisen.

Das Fluidverdrängungselement 7 kann beispielsweise als Kunststoff-Schaumstoff-Element ausgebildet sein.

Im Kolben 4 können siebartig ausgebildete Fluiddurchlassbereiche 4.1, 4.2 vorgesehen sein, die sich über einen Winkel von vorzugsweise jeweils 10° - 40° des Umfangs des Kolbens 4 erstrecken.

Um ein Dämpferprellen zu verhindern, kann mindestens eine Ausgleichsöffnung zwischen Zylinder 1 und Kolben 4 und/oder im Kolben 4 vorgesehen sein, welcher kein Flügel zugeordnet ist. Hierdurch ist sichergestellt, dass selbst bei hoher Relativgeschwindigkeit zwischen Kolben 4 und Zylinder 1 ein hinreichender Fluidaustausch zwischen den beiden durch den Kolben 4 getrennten Fluidräumen stattfinden kann.

In Fig. 1 sind die Bauteile eines Ausführungsbeispiels eines Fluiddämpfers, die im Zylinder 1 anzuordnen sind, in zerlegter Bauweise dargestellt. Der in Fig. 1 gezeigte Fluiddämpfer besteht aus einem Zylinder 1, einer Hülse 2, einer Schraubenfeder 3, einem Kolben 4, einer Kolbenstange 5 und einem Verschlussteil 6. Er ist mit der geschlossenen Stirnseite des Zylinders 1 an einem feststehenden Möbelteil befestigt. Im Zylinder 1 ist der Kolben 4 am Ende der in den Zylinder 1 eingeführten Kolbenstange 5 fest, also unverdrehbar gegenüber dem Kolben, angeordnet. Im Kolben 4 ist die Kolbenstange 5 zugänglich. Diese trägt an ihrem Ende die an einem Ende geschlossene Hülse 2, die auf dem verjüngten Ende 5.1 der Kolbenstange 5 radial verdrehbar ist.

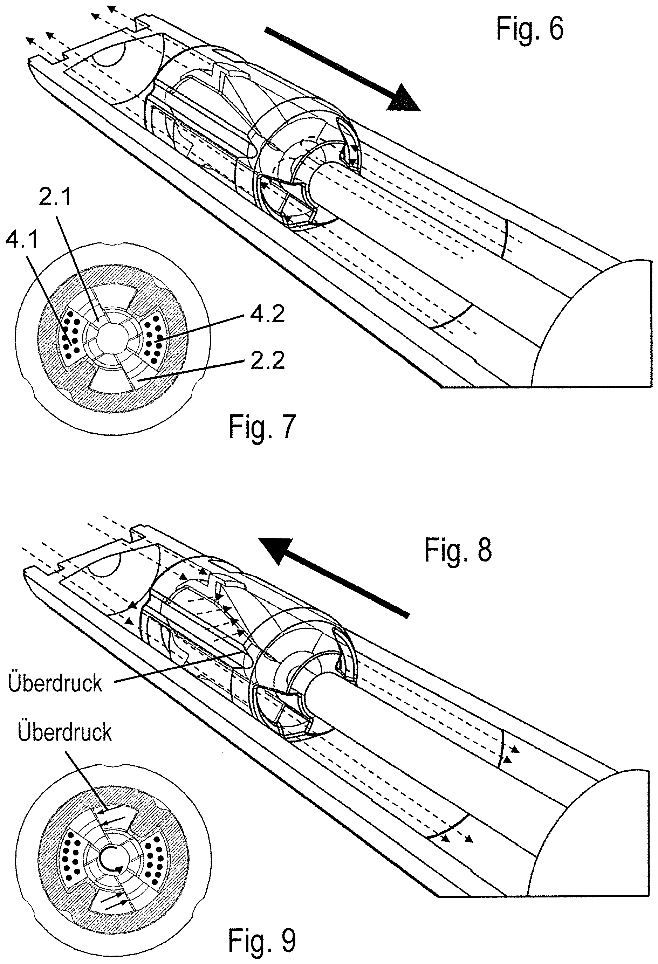

Die Hülse 2 trägt auf ihrem Umfang in Längsrichtung zwei gegenüberliegende Flügel 2.1 und 2.2, deren Außenflächen 2.5 und 2.6 über zwei im Kolben 4 gebildete Fluidöffnungsbereiche 4.1 und 4.2 (s. Figuren 7, 9, 11) für deren Verschließen schiebbar sind. Die Hülse 2 weist auf ihrer Außenfläche ferner zwei gegenüberliegende Nocken 2.3 und 2.4 auf, die in Quernuten 4.3 und 4.4 des Kolbens 4 geführt sind.

Die auf das verjüngte Ende 5.1 aufgeschobene Schraubenfeder 3 stützt sich einerseits auf einem der Flügel 2.1, 2.2 und andererseits auf einem Anschlag des Kolbens 4 derart ab, dass diese Flügel so entgegen dem Uhrzeigersinn verstellt sind, dass sie die Durchlassöffnungsbereiche 4.1, 4.2 im Kolben 4 freigeben.

Das offene Ende des Zylinders 1 ist mit dem Verschlussteil 6 verschlossen, das im Außendurchmesser an den Innendurchmesser des Zylinders 1 angepasst ist. Die Kolbenstange 5 ist durch das Verschlussteil 6 hindurch aus dem Zylinder 1 hinausgeführt und kann beim Schließen des verstellbaren Möbelteils mit dem verstellbaren Möbelteil in Kontakt gebracht werden.

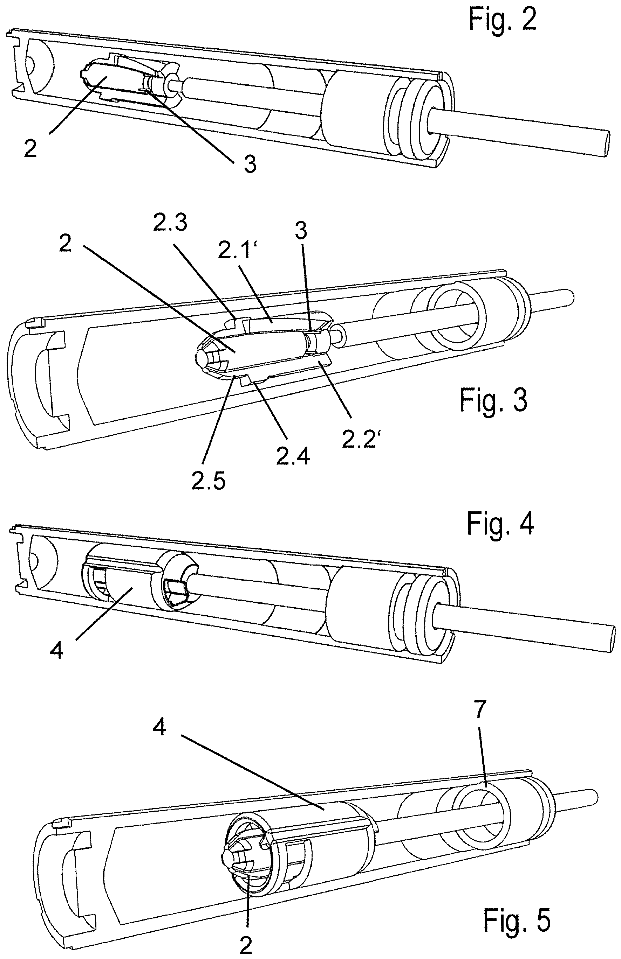

Zwischen dem Verschlussteil 6 und dem Kolben 4 kann ein Fluidverdrängungselement 7, beispielsweise in Form eines Kunststoff-Schaumstoff-Elements, koaxial zur Längsachse der Kolbenstange 5 verstellbar angeordnet sein, beispielsweise verstellbar an der Kolbenstange 5 geführt werden, wie die Figuren 2 - 6, 8 und 10 zeigen.

Der Kolben 4 ist im Außendurchmesser an den Innendurchmesser des Zylinders 1 und für die Aufnahme der Kolbenstange 5 angepasst. Der Kolben 4 ist auf dem reduzierten Endabschnitt 5.1 der Kolbenstange 5 unverdrehbar festgelegt.

Den Abschluss auf der Kolbenstange 5 bildet das Verschlussteil 6 mit dem Bund 6.1.

Die Figuren 2 und 3 zeigen Hülsen 2, die mit ähnlich gestalteten Flügeln 2.1', 2.2' versehen sind. In beiden Figuren ist der Kolben weggelassen worden, während in den Figuren 4 und 5 auch die Kolben 4 mit den eingesetzten Hülsen 2 dargestellt sind. Insbesondere in Fig. 5 ist auch das Fluidverdrängungselement 7 in Form einer Trommel mit zwei siebartigen Öffnungen 7.2, 7.3 auf ihrem Umfang und einer siebartigen Öffnung 7.3 auf ihrer Stirnseite zu erkennen.

In der Fig. 6 ist der Bewegungsablauf beim Schließen der Möbelteile mit niedriger Geschwindigkeit der Kolbenstange 5 dargestellt. Der Hauptstrom des Fluids fließt nach dem Querschnitt der Fig. 7 durch den Fluiddämpfer durch zwei Fluidöffnungsbereiche 4.1, 4.2. Die Flügel 2.1, 2.2 verharren in einer Ausgangsstellung. Es entsteht nur eine minimale Bremswirkung.

In der Fig. 8 beginnt der Überdruck der Kolbenstange. Dabei drehen sich die Flügel 2.1, 2.2 gemäß der Fig. 9 entgegen der Wirkung der Schraubenfeder 3 umso mehr, je größer die Geschwindigkeit ist.

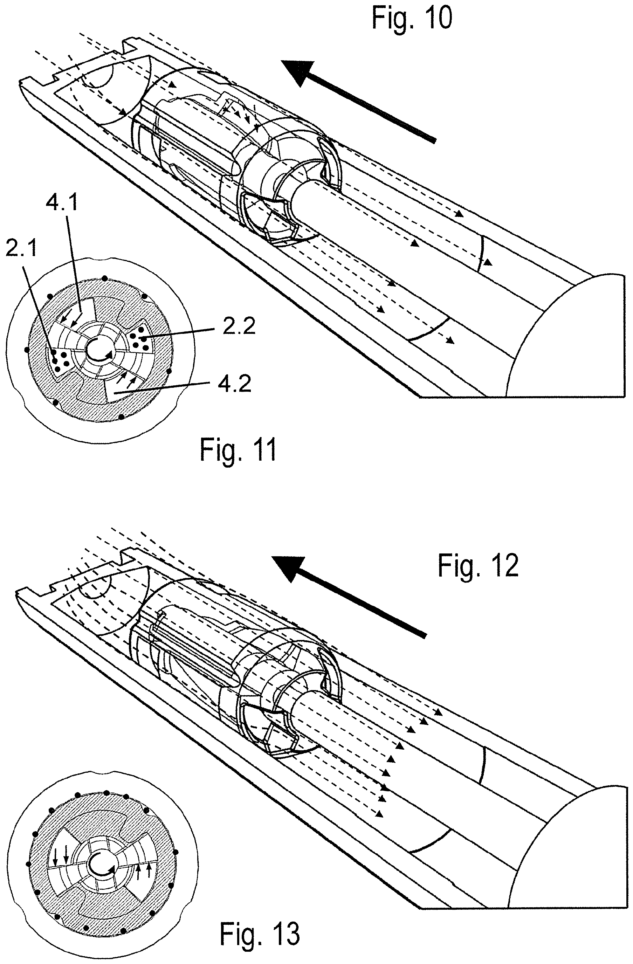

Bei sehr großer Geschwindigkeit, d. h. bei sehr großem Druck der Kolbenstange 5 auf den Kolben entgegen eines Fluidwiderstands, verschließen die Flügel 2.1, 2.2 die Durchlassöffnungsbereiche 4.1, 4.2 nach den Figuren 10, 11 so weit, dass nur noch ein kleiner Durchflussquerschnitt durch den Kolben 4 gegeben ist. Das Fluid fließt durch den äußeren Spalt zwischen dem Zylinder 1 und dem Kolben 4 und verursacht eine Gegenkraft.

Reduziert sich die Geschwindigkeit dabei, dann wird gegen Ende des Schließvorgangs der Möbelteile durch die Schraubenfeder 3 eine Drehbewegung der Flügel 2.1, 2.2 im Uhrzeigersinn bewirkt, was zu einem kontinuierlichen Öffnen der Fluiddurchlassbereiche 4.1, 4.2 führt. Dies führt demzufolge zu einer Reduktion der Kolbengeschwindigkeit und einem weichen Anschlag der zu schließenden Möbelteile.

Bei sehr hohem auf den Fluiddämpfer einwirkendem Druck, kann es zu einer in Fig. 12 und Fig. 13 gezeigten Blockade der Durchlass- bzw. Fluidöffnungsbereiche 4.1 und 4.2 kommen. Daher sieht eine vorteilhafte Weiterbildung der Erfindung vor, die die zur Freigabe der Durchlass- bzw. Fluidöffnungsbereiche 4.1 und 4.2 notwendige Rückstellkraft des mindestens einen Flügels 2.1, 2.2 sicherstellende Federbelastung anstatt durch eine innenliegende Schraubenfeder 3 oder zusätzlich zu einer innenliegenden Schraubenfeder 3 durch eine in einer am Außenumfang des Kolbens 4 angeordnete Nut 7 zwischen Kolben 4 und Zylinder 1 eingelegte Torsionsfeder 8, etwa eine Drehfeder oder eine Schenkelfeder mit entlang der Längsachse gerichteten Schenkeln, aufzubringen.

Die Nut 7 ist vorteilhaft in radialer Richtung normal zur Längsachse hin gesehen tiefer, als der Innendurchmesser der Torsionsfeder 8 beziehungsweise der Materialquerschnitt des Federmaterials der Torsionsfeder 8 dies erfordern würde. Darüber hinaus wird die Torsionsfeder 8 vorteilhaft bei Beanspruchung entgegen der Rückstellkraft aufgewickelt. Dadurch nimmt ihr Außendurchmesser ab. Bei Ausübung der Rückstellkraft wird sie wieder abgewickelt, wodurch ihr Außendurchmesser in Ruheposition des Kolbens und bei freigegebenen Durchlass- bzw. Fluidöffnungsbereichen 4.1 und 4.2 am größten ist.

Wird nun die Torsionsfeder 8 bei einer Bewegung entgegen der Rückstellkraft zusammengedrückt und hierdurch um die Längsachse aufgewickelt, so erzeugt dies einen Spalt 9 zwischen Kolben 4 und Zylinder 1. Durch diesen Spalt kann Fluid am Kolben 4 vorbei von dem einen in den anderen Fluidraum strömen. Alternativ wird ein bereits bestehender Spalt 9 hierdurch vergrößert.

Demnach kann bei einem voranstehend beschriebenen Fluiddämpfer vorgesehen sein, dass die zur Rückstellung der Flügel 2.1, 2.2 unter Freigabe der Durchlass- bzw. Fluidöffnungsbereiche 4.1 und 4.2 vorgesehene Federbelastung zumindest zum Teil durch eine in einer Nut 7 am Umfang des Kolbens 4 zwischen Kolben 4 und Zylinder 1 angeordnete Torsionsfeder 8 aufgebracht ist. Diese wird bei Belastung entgegen der Federbelastung um die Längsachse aufgewickelt und weist im Ruhezustand des Kolbens 4 ihren größten Außendurchmesser auf.

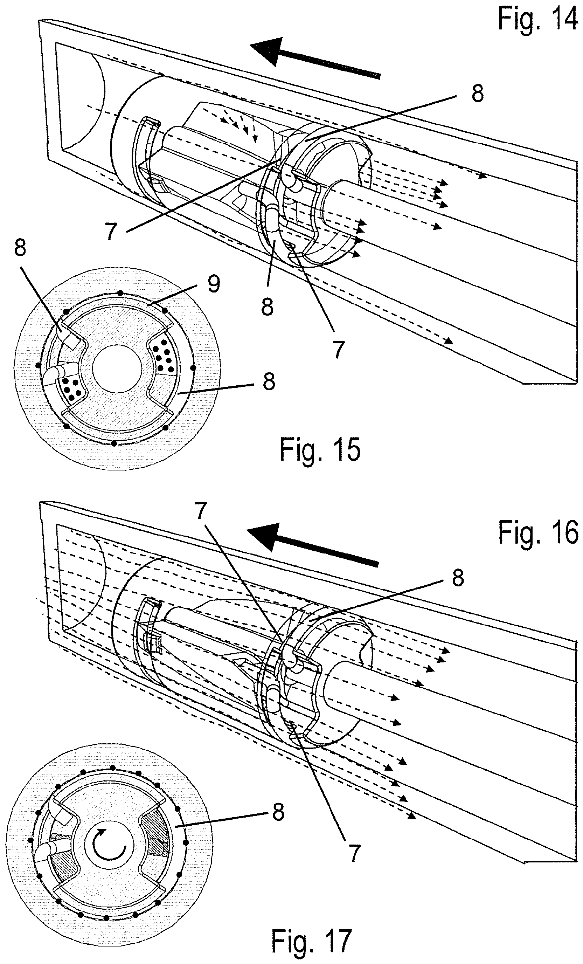

In Fig. 14 bis Fig. 19 ist ein Fluiddämpfer gezeigt, welcher auch bei Veränderung der Umgebungstemperatur einhergehend mit einer Veränderung der Viskosität eines im Zylinder befindlichen Fluids noch eine einwandfreie Funktion aufweist.

Die Viskosität zumindest bestimmter Öle, beispielsweise eines Silikon-Öls, verändert sich mit einer Änderung der Temperatur nach der Maßgabe, dass, wenn die Temperatur sinkt, die Viskosität des Öls steigt.

Hierdurch wird auch die Dämpfkraft F beeinflusst, mit der sich ein mit entsprechendem Öl befüllter Fluiddämpfer der Bewegung des Kolbens entlang der Längsachse im Zylinder widersetzt. Hierbei gilt der Zusammenhang, dass mit sinkender Temperatur die Dämpfkraft steigt, wobei:

$$F = \eta\, A\, v/s.$$

Um dem Einfluss der Temperatur entgegenzuwirken, ist bei dem in Fig. 14 bis Fig. 19 dargestellten Fluiddämpfer vorgesehen, dass bei veränderten Bedingungen mechanisch, beispielsweise vermittels einer Federkraft, ein Teil des ansonsten durch die Durchlassöffnungen 4.1, 4.2 hindurchtretenden Strömungsvolumens umgeleitet oder beispielsweise durch die Mitte oder am Rand am Kolben 4 vorbeigeleitet wird. Damit wird einer drohenden Änderung des Dämpfungswiderstands entgegengewirkt.

Ein hiermit überraschend einhergehender Vorteil ist, dass dieses Prinzip auch als eine Überlast-Funktion dienen kann. Dadurch kann ab einer bestimmten Strömung ein Teil des Strömungsvolumens beispielsweise durch die Mitte oder am Rand am Kolben 4 vorbeigeleitet werden, wodurch Belastungsspitzen abgefangen werden können.

Vorzugsweise ist der Fluiddämpfer für gegeneinander verstellbare Möbelteile mit einem in einem Zylinder 1 verstellbar geführten Kolben 4 verwirklicht ist, der mit einer aus dem Zylinder 1 herausgeführten Kolbenstange 5 verbunden ist, die mit dem verstellbaren Möbelteil in Kontakt bringbar ist, wobei:

- der Zylinder 1 mit dem kolbenstangenfreien geschlossenen Ende und dem feststehenden Möbelteil verbindbar ist und im Kolben 4 mindestens eine Durchlassöffnung 4.1 für ein im Zylinder 1 befindliches Fluid vorgesehen ist,
- beim Bewegen der Möbelteile gegeneinander, also aufeinander zu, in Abhängigkeit von der Geschwindigkeit oder vom Druck auf die Kolbenstange 5 ein im Kolben 4 drehbar gelagerter Flügel 2.1 die Durchlassöffnung 4.1 im Kolben 4 fortschreitend verschließt und beim Bewegen der Möbelteile voneinander weg eine Schraubenfeder 3 den Flügel 2.1 zurückstellt und die Durchlassöffnung 4.1 freigibt,
- der Kolben 4 zylinderförmig ausgebildet und mit dem Außendurchmesser an den Innendurchmesser des Zylinders 1 angepasst ist,
- der Zylinder 1 an der offenen Stirnseite mit einem Verschlussteil 6 verschlossen ist und
- auf das im Zylinder befindliche Ende der Kolbenstange 5 eine Hülse 2 radial verdrehbar aufgeschoben ist, die auf ihrem Umfang in Längsrichtung zwei gegenüberliegende Flügel 2.1, 2.2; 2.1', 2.2' trägt, deren Außenflächen über zwei im Kolben 4 gebildete Fluiddurchlassbereiche 4.1, 4.2 für deren Verschließen schiebbar sind, und die mittels Führungselementen 2.3, 2.4 in Quernuten 4.3, 4.4 des Kolbens 4 gehalten ist.

**Patentansprüche**

1. Fluiddämpfer für gegeneinander verstellbare Teile, insbesondere Möbelteile, mit

   - einem in einem Zylinder (1) entlang einer Längsachse verstellbar geführten Kolben (4),
   - mindestens einer Durchlassöffnung (4.1, 4.2) für durchströmendes Fluid, die im Kolben (4) und/oder zwischen Kolben (4) und Zylinder (1) ausgebildet ist,
   - einer Hülse (2) mit Flügeln (2.1, 2.2; 2.1', 2.2'), die relativ zum Kolben (4) gegen eine Federbelastung um die Längsachse oder um eine parallel zu dieser verlaufenden Achse radial verdrehbar angeordnet ist und mit den Durchlassöffnungen (4.1, 4.2) in Wirkverbindung bringbar ist, **dadurch gekennzeichnet, dass** der Fluiddämpfer ausgebildet ist mit
   - einer hohlzylinderförmigen Partie des Kolbens (4), welche die Hülse (2) und den mindestens einen an ihrem Umfang angeordneten Flügel (2.1, 2.2; 2.1', 2.2') entlang zumindest eines Teils der Längsachse radial umgibt und
   dass der Flügel (2.1, 2.2; 2.1', 2.2') ausgebildet ist, die Durchlassöffnung (4.1, 4.2) gegen eine Druckbeanspruchung auf den Fluiddämpfer fortschreitend zu verschließen und
   sowohl bei unbeanspruchtem Fluiddämpfer als auch bei einer Zugbeanspruchung auf den Fluiddämpfer freizugeben.

2. Fluiddämpfer nach Anspruch 1,
   **dadurch gekennzeichnet,**
   **dass** die Hülse (2) mittels einer Rastverbindung radial verdrehbar am Kolben (4) gehalten ist.

3. Fluiddämpfer nach Anspruch 2,
   **dadurch gekennzeichnet,**
   **dass** die Hülse (2) relativ zum Kolben (4) eingreifende Führungselemente (2.3, 2.4) als radial verdrehbar angeordnete, haltende Rastverbindungen in Quernuten (4.3, 4.4) umfasst.

4. Fluiddämpfer nach einem der Ansprüche 1 bis 3,
   **dadurch gekennzeichnet,**
   **dass** der Kolben (4) mit einer aus dem Zylinder (1) herausgeführten Kolbenstange (5) verbunden ist, die mit einem verstellbaren Möbelteil in Kontakt bringbar ist.

5. Fluiddämpfer nach einem der voranstehenden Ansprüche,
   **dadurch gekennzeichnet,**
   **dass** der Zylinder (1) mit dem kolbenstangenfreien geschlossenen Ende und einem feststehenden Möbelteil verbindbar ist.

6. Fluiddämpfer nach einem der voranstehenden Ansprüche,
   **dadurch gekennzeichnet,**
   **dass** die Hülse (2) auf ihrem Umfang in Längsrichtung zwei gegenüberliegende Flügel (2.1, 2.2; 2.1', 2.2') trägt, deren Außenflächen über zwei im Kolben (4) und/oder zwischen Kolben (4) und Zylinder (1) gebildete Durchlassöffnungen (4.1, 4.2) für deren Verschließen schiebbar sind.

7. Fluiddämpfer nach einem der voranstehenden Ansprüche,
   **dadurch gekennzeichnet,**
   **dass** zwischen Kolben (4) und Hülse (2) eine die Federbelastung erzeugende Feder (3) angeordnet ist.

8. Fluiddämpfer nach Anspruch 7,

**dadurch gekennzeichnet,**
**dass** die bevorzugt als Schraubenfeder (3) ausgeführte Feder (3) die Hülse (2) in der zurückgestellten Stellung bei geöffneter Durchlassöffnung (4.1, 4.2) hält.

9. Fluiddämpfer nach einem der voranstehenden Ansprüche,
**dadurch gekennzeichnet,**
**dass** der Zylinder (1) mit einem Verschlussteil (6) verschlossen ist.

10. Fluiddämpfer nach Anspruch 9,
**dadurch gekennzeichnet,**
**dass** sich an die innere Stirnfläche (4) des Verschlussteils (6) ein kolbenförmiges, siebartiges Fluidverdrängungselement (7) anschließt, durch das die Kolbenstange (5) hindurchgeführt ist und das auf seiner Umfangsfläche und seiner inneren Stirnfläche Sieböffnungen (7.1 - 7.3) aufweist.

11. Fluiddämpfer nach einem der voranstehenden Ansprüche,
**dadurch gekennzeichnet,**
**dass** beim Bewegen der Kolbenstange (5) aus der Ausgangsstellung mit hoher Geschwindigkeit der mindestens ein Flügel (2.1, 2.2) die Durchlassöffnung (10) im Kolben (1) bis auf einen kleinen Querschnitt verschließt.

12. Fluiddämpfer nach einem der voranstehenden Ansprüche,
**dadurch gekennzeichnet,**
**dass** der Kolben (4) zylinderförmig ausgebildet und mit dem Außendurchmesser an den Innendurchmesser des Zylinders (1) angepasst ist.

13. Fluiddämpfer nach einem der voranstehenden Ansprüche,
**dadurch gekennzeichnet,**
**dass** mindestens eine Ausgleichsöffnung zwischen Zylinder (1) und Kolben (4) und/oder im Kolben (4) vorgesehen ist.

14. Fluiddämpfer nach einem der voranstehenden Ansprüche,
**dadurch gekennzeichnet,**
**dass** die Federbelastung zumindest zum Teil durch eine in einer Nut (7) am Umfang des Kolbens (4) zwischen Kolben (4) und Zylinder (1) angeordnete Torsionsfeder (8) aufgebracht ist.

**Claims**

1. Fluid damper for mutually adjustable parts, in particular furniture parts, with a piston (4) guided in a cylinder (1) so as to be adjustable along a longitudinal axis, at least one passage opening (4.1, 4.2) for fluid flowing through, which is formed in the piston (4) and/or between piston (4) and cylinder (1), a sleeve (2) with wings (2.1, 2.2; 2.1', 2.2'), which is arranged to be radially rotatable relative to the piston (4) against a spring load about the longitudinal axis or about an axis extending parallel thereto and can be brought into operative connection with the passage openings (4.1, 4.2), **characterized in that** the fluid damper is formed with a hollow cylindrical part of the piston (4) which radially surrounds the sleeve (2) and the at least one vane (2.1, 2.2; 2.1', 2.2') arranged on its circumference along at least part of the longitudinal axis and that the vane (2.1, 2.2; 2.1', 2.2') is designed to progressively close the passage opening (4.1, 4.2) against a compressive load on the fluid damper and to release it both when the fluid damper is unloaded and when a tensile load is applied to the fluid damper.

2. Fluid damper according to claim 1, **characterized in that** the sleeve (2) is held radially rotatably on the piston (4) by means of a latching connection.

3. Fluid damper according to claim 2, **characterized in that** the sleeve (2) comprises guide elements (2.3, 2.4) engaging relative to the piston (4) as radially rotatably arranged, retaining latching connections in transverse grooves (4.3, 4.4).

4. Fluid damper according to one of claims 1 to 3, **characterized in that**,
that the piston (4) is connected to a piston rod (5) which is led out of the cylinder (1) and which can be brought into contact with an adjustable furniture part.

5. Fluid damper according to one of the preceding claims, **characterized in that** the cylinder (1) can be connected to the closed end free of the piston rod and to a fixed furniture part.

6. Fluid damper according to one of the preceding claims, **characterized in that** the sleeve (2) carries on its circumference in the longitudinal direction two opposite wings (2.1, 2.2; 2.1', 2.2'), the outer surfaces of which can be pushed over two passage openings (4.1, 4.2) formed in the piston (4) and/or between the piston (4) and the cylinder (1) for closing them.

7. Fluid damper according to one of the preceding claims, **characterized in that** a spring (3) generating the spring load is arranged between piston (4) and sleeve (2).

8. Fluid damper according to claim 7, **characterized in that** the spring (3), preferably designed as a helical spring (3), holds the sleeve (2) in the reset position when the passage opening (4.1, 4.2) is open.

9. Fluid damper according to one of the preceding claims, **characterized in that** the cylinder (1) is closed with a closure part (6).

10. Fluid damper according to claim 9, **characterized in that** the inner end face (4) of the closure part (6) is adjoined by a piston-shaped, sieve-like fluid displacement element (7) through which the piston rod (5) is passed and which has sieve openings (7.1 - 7.3) on its circumferential surface and its inner end face.

11. Fluid damper according to one of the preceding claims, **characterized in that** when the piston rod (5) is moved from the starting position at high speed, the at least one vane (2.1, 2.2) closes the passage opening (10) in the piston (1) except for a small cross-section.

12. Fluid damper according to one of the preceding claims, **characterized in that** the piston (4) has a cylindrical shape and its outer diameter is adapted to the inner diameter of the cylinder (1).

13. Fluid damper according to one of the preceding claims, **characterized in that** at least one equalizing opening is provided between cylinder (1) and piston (4) and/or in the piston (4).

14. Fluid damper according to one of the preceding claims, **characterized in that** the spring load is applied at least in part by a torsion spring (8) arranged in a groove (7) on the circumference of the piston (4) between the piston (4) and the cylinder (1).

## Revendications

1. Amortisseur par fluide pour des parties réglables en concurrence, en particulier pour des parties de meubles, avec

   - un piston (4) guidé réglable dans un cylindre (1) tout au long d'un axe longitudinal,
   - au minimum une ouverture au passage (4.1, 4.2) pour le fluide s'écoulant formée dans le piston (4) et/ou dans le piston (4) et ou dans le cylindre (1),
   - une douille (2) avec des ailettes (2.1, 2.2; 2.1', 2.2') qui est disposée à titre pivotant et à titre relatif au niveau du piston (4) contre la contrainte élastique autour de l'axe longitudinal ou à titre parallèle s'étendant vers l'axe radial et est adaptable aux ouvertures au passage (4.1, 4.2) en liaison active est caractérisé de sorte que l'amortisseur par fluide est formé d'une partie en forme de cylindre creux du piston (4) entourant la douille (2) et que l'ailette (2.1, 2.2; 2.1', 2.2') est disposée au minimum à sa périphérie tout autour au minimum d'une partie de l'axe longitudinal à titre radial et que l'ailette (2.1, 2.2; 2.1', 2.2') est formée de sorte que l'ouverture au passage (4.1, 4.2) se ferme contre la contrainte de pression à titre progressif de l'amortisseur par fluide et que l'amortisseur par fluide se libère que ce soit au niveau de l'amortisseur par fluide non réclamé ou que ce soit lors d'un effort de traction.

2. Amortisseur par fluide selon la revendication 1 est caractérisé de sorte que la douille (2) est maintenue par le biais d'une liaison à encliquetage réglable à titre radial au niveau du piston (4).

3. Amortisseur par fluide selon la revendication 2 est caractérisé de sorte que la douille (2) se compose à titre relatif au niveau du piston (4) d'éléments de guidage intrusifs (2.3, 2.4) en qualité de liaisons à encliquetage réglables à titre radial disposées et maintenues au niveau des rainures transversales (4.3, 4.4).

4. Amortisseur par fluide selon l'une des revendications 1 jusqu'à 3 est caractérisé de sorte que le piston (4) est relié à une tige de piston (5) sortant du cylindre (1) qui est adaptable au contact avec une partie du meuble réglable.

5. Amortisseur par fluide selon l'une des revendications antérieures est caractérisé de sorte que le cylindre (1) est reliable à l'extrémité fermée libre de la tige de piston à une partie du meuble fixe.

6. Amortisseur par fluide selon l'une des revendications antérieures est caractérisé de sorte que la douille (2) supporte à sa périphérie dans la direction longitudinale deux ailettes opposées (2.1, 2.2; 2.1', 2.2') dont la surface extérieure est coulissante sur deux ouvertures au passage (4.1, 4.2) formées au niveau du piston (4) et/ou entre le piston (4) et le cylindre (1) en vue de leur fermeture.

7. Amortisseur par fluide selon l'une des revendications antérieures est caractérisé de sorte qu'une languette (3) est disposée entre le piston (4) et la douille (2) générant la contrainte élastique.

8. Amortisseur par fluide selon la revendication 7 est caractérisé de sorte que la languette (3) exécutant à titre préférable le ressort hélicoïdal (3) maintient la douille (2) en position remise à zéro dans l'ouverture au passage ouverte (4.1, 4.2).

9. Amortisseur par fluide selon l'une des revendications antérieures est caractérisé de sorte que le cylindre (1) est verrouillé à l'aide d'un obturateur (6).

10. Amortisseur par fluide selon la revendication 9 est caractérisé de sorte qu'un élément de déplacement de fluide de tamis en forme de piston (7) rejoint la face frontale intérieure (4) de l'obturateur (6) d'où la tige du piston (5) est guidée et qui présente sur sa surface périphérique et sur sa face frontale intérieure des ouvertures de tamis (7.1 - 7.3).

11. Amortisseur par fluide selon l'une des revendications antérieures est caractérisé de sorte que l'ouverture au passage (10) au niveau du piston (1) se ferme lors du déplacement de la tige de piston (5) de la position initiale à grande vitesse d'une ailette (2.1, 2.2) au minimum jusqu'à une petite section transversale.

12. Amortisseur par fluide selon l'une des revendications antérieures est caractérisé de sorte que le piston (4) est formé à titre cylindrique et est adaptable au diamètre extérieure du diamètre intérieure du cylindre (1).

13. Amortisseur par fluide selon l'une des revendications antérieures est caractérisé de sorte qu'une ouverture de compensation est prévue au minimum entre le cylindre (1) et le piston (4) et/ou au niveau du piston.

14. Amortisseur par fluide selon l'une des revendications antérieures est caractrisé de sorte que la contrainte élastique est appliquée au minimum et à titre partiel à travers un ressort de torsion (8) disposé dans une rainure (7) en périphérie du piston (4) entre le piston (4) et le cylindre (1).

Fig. 1

Fig. 2

2

3

2.3

2

2.1'

3

Fig. 3

2.5

2.4

2.2'

Fig. 4

4

4

4

7

2

Fig. 5

Fig. 6

2.1
4.1
4.2
2.2

Fig. 7

Fig. 8

Überdruck

Überdruck

Fig. 9

Fig. 10

Fig. 11

4.1

2.1

2.2

4.2

Fig. 12

Fig. 13

Fig. 14

8

7

8

8

7

8

9

8

Fig. 15

7

8

7

Fig. 16

8

Fig. 17

Fig. 18

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202014002228 U1
- DE 202005020820 U1
- DE 69821909 T2
- DE 102015109188 A1
- US 7410154 B2
- US 8925695 B2
- DE 102004008956 A1